# EUROPEAN PATENT SPECIFICATION

(11) **EP 2 562 208 B1**
(45) Date of publication and mention of the grant of the patent: **09.09.2015**
(21) Application number: 11010264.7
(22) Date of filing: 28.12.2011
(51) Int. Cl.: C08K 5/00

(54) **Environmentally friendly coated yarn and coating compostion therefor**
Umweltfreundlich beschichteter Garn und Beschichtungszusammensetzung dafür
Fil revêtu écologique et composition de revêtement associée

(30) Priority: 25.08.2011 KR 20110085269
(43) Date of publication of application: 27.02.2013
(73) Proprietor: Alkenz Co., Ltd., 621-803 Gyeongsangnam-do (KR)
(72) Inventor: Jung, Ki Sung, Gunpo-si Gyenoggido 435-060 (KR); Kang, Hun Hee, Anseong-si Gyeonggido 456-705 (KR); Cho, Byung Mook, Busan 607-764 (KR); Gu, Won Ho, Gimhae-si Gyeongsangnam-do 621-807 (KR); Jung, Jihoon, Gimhae-si Gyeongsangnam-do 621-798 (KR); Kim, Hyosang, Busan 608-802 (KR)
(74) Representative: Patronus IP Patent- und Rechtsanwälte

(56) References cited:
- WO-A1-2011/015714
- DE-A1- 19 941 181
- US-A- 5 024 869
- US-A1- 2010 003 879

## Description

### FIELD OF THE INVENTION

The present invention relates to a coating composition for preparing a coated yarn.

Furthermore, the present invention relates to a recyclable, environmentally friendly coated yarn, a preparation method thereof, a fabric thereof, and a flame retardant coating composition used therefor.

### BACKGROUND OF THE INVENTION

A polyvinyl chloride (PVC) coated yarn is prepared by extrusion coating a PVC resin on a polyester yarn. Since a PVC yarn has excellent elasticity, anti-wrinkle property, resilience, antibiosis and coloring property, it has been widely used in the preparation of a blind, wall paper, a flooring material, household items, decorations, electronics, furniture, etc.

A PVC coated yarn is prepared by coating a PVC resin on a high-tenacity polyethylene terephthalate (PET) yarn at a coating rate of 300 to 1100 m/min in an extrusion coating machine to impart to the PET yarn such properties as flame retardancy, antibiosis, and others.

Korean Patent Laid-open Publication No. 2005-79896 discloses a method for preparing a fabric by coating a glass fiber or a polyester fiber with a coating composition comprising a PVC resin, a plasticizer and a flame retardant.

Although such a PVC coated yarn has excellent flame retardancy, antibiosis, tensile strength and elongation, it involves a problem that once defective products are produced during the extrusion coating, warping, or weaving process, they cannot be recycled but have to be disposed since the PVC coating layer is not readily removed from the polyester yarn. Moreover, when a PVC coated fiber is burned, chlorine release from PVC may react with the plasticizer, e.g., a phthalate-based compound, contained in the PVC coating layer, thereby generating toxic pollutants. Such an environmentally hazardous fiber product must be disfavored by consumers since it may threaten their health.

US 2010/0003879 A1 discloses a flame-retardant composition based on PVC plastisol included in the composition of technical textile structures that may be used in the construction industry and its application, inter alia, for the manufacture of yarns for weaving sun canopies.

DE 199 41 181 A1 discloses a fire-retardant resin composition comprising a thermoplastic resin component and a metal hydrate, wherein the thermoplastic resin component comprises a block copolymer, a non-aromatic-series softening agent and an ethylene/α-olefin-copolymer.

US 5,024,869 refers to thermoplastically processable synthetic polymers and fibers produced therefrom which are rendered flame retardant by certain organic pigments which are substantially unreactive with the polymer.

WO 2011/015714 A1 discloses a natural fiber-based thermal insulator and a method of manufacturing it.

Therefore, there is a need for developing an environmentally friendly yarn having improved flame retardancy and antibiosis.

### SUMMARY OF THE INVENTION

Accordingly, it is an object of the present invention to provide a coating composition used in the preparation of an environmentally friendly coated yarn.

It is another object of the present invention to provide an environmentally friendly coated yarn having improved flame retardancy.

It is another object of the present invention to provide a method for preparing an environmentally friendly coated yarn.

It is a still further object of the present invention to provide a fabric woven from a coated yarn.

The object is solved by the coating composition according to claim 1. Advantageous embodiments are defined in the corresponding subclaims.

In accordance with one aspect of the present invention, there is provided a coating composition for preparing a coated yarn, wherein the coating composition comprises a polypropylene random copolymer resin in an amount of 50 to 70 wt% and a polypropylene elastomer resin in an amount of 5 to 20 wt%, based on the weight of said coating composition and a flame retardant selected from the group consisting of an organic phosphorus-based flame retardant, an inorganic flame retardant, and a mixture thereof, wherein said flame retardant is selected from the group consisting of melamine phosphate, melamine polyphosphate, ammonium phosphate, isopropylphenyl diphenyl phosphate (IPPP), triphenyl phosphate (TPP), triethyl phosphate (TEP), resorcinol diphosphate (RDP), tricresyl phosphate (TCP), magnesium dihydroxide (MDH), aluminium trihydroxide, zinc borate (ATH), antimony trioxide, and a mixture thereof; and said coating composition comprises said flame retardant in an amount of 15 to 20 wt% based on the weight of said coating composition.

In accordance with a further aspect of the present invention, there is provided a coated yarn composed of a core yarn comprising a first polyolefin resin and a coating layer, obtainable by a coating composition as disclosed above, covering the core yarn, wherein the coating layer comprises a second polyolefin resin and a flame retardant, and the first polyolefin resin and the second polyolefin resin are each independently selected from the group consisting of a polyethylene resin, a polyethylene copolymer resin, a polypropylene rein, a polypropylene copolymer resin and a blend resin thereof.

In accordance with another aspect of the present invention, there is provided a method for preparing a coated yarn, comprising the steps of: a) preparing a core yarn comprising a first polyolefin resin; b) preparing a coating composition comprising a second polyolefin resin and a flame retardant; and c) coating the core yarn with the coating composition to obtain the coated yarn, wherein the first polyolefin resin and the second polyolefin resin are each independently selected from the group consisting of a polyethylene resin, a polyethylene copolymer resin, a polypropylene resin, a polypropylene copolymer resin, and a blend resin thereof.

In accordance with a still further aspect of the present invention, there is provided a fabric woven from the coated yarn.

Since both of the core yarn and the coating layer of the coated yarn according to the present invention are made of polyolefin resins, the coated yarn can readily be recycled and re-extruded to produce a coreless yarn useful as a flooring material or other industrial materials. Moreover, the inventive coated yarn solves the problem of poor flame retardancy of conventional non-PVC coated yarn so that a fabric woven made from the inventive coated yarn is useful in the preparation of a blind, a flooring material, wall paper, household items and other interior elements.

### BRIEF DESCRIPTION OF THE DRAWINGS

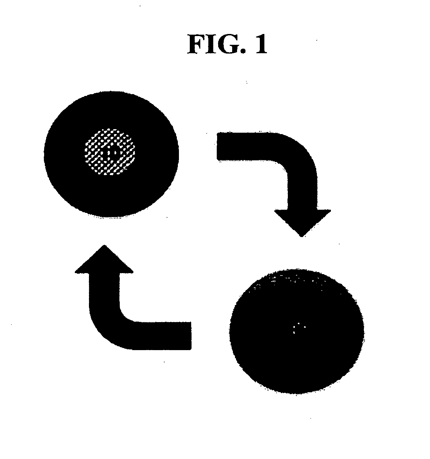

The above and other objects and features of the present invention will become apparent from the following description of the invention, when taken in conjunction with the accompanying drawing, FIG 1, which shows cross-sectional views of the inventive coated yarn and a coreless yarn produced by recycling the coated yarn (10: core yarn of the coated yarn, 20: coating layer of the coated yarn, and 30: coreless yarn).

### DETAILED DESCRIPTION OF THE INVENTION

As shown in FIG. 1, the coated yarn of the present invention composed of a core yarn (10) and a coating layer (20). The core yarn (10) and the coating layer (20) both comprise a polyolefin resin such as a polyethylene resin and a polypropylene resin so that the coated yarn has good thermoplasticity. Further, the coating layer (20) comprises a flame retardant in order to render the coated yarn flame retardant.

The coated yarn can be recycled and re-extruded to produce a coreless yarn (30), which can be used in the preparation of a flooring material or other industrial materials.

The core yarn (10) may have a diameter of 30 to 1500 denier, more preferably 150 to 600 denier, and the coating layer (20) has a thickness of 120 to 1000 µm, more preferably 100 to 700 11µm. The coated yarn may have a diameter of 300 to 4000 denier, more preferably 490 to 3200 denier.

The coating layer (20) is made from a coating composition comprising a polyolefin resin, a flame retardant and other additives, each of which is described in detail below.

### Polyolefin Resin

The polyolefin resin used in the present invention may be a polyethylene (PE) resin, a polyethylene copolymer resin, a polypropylene (PP) resin, a polypropylene copolymer resin, or a blend resin thereof.

More specifically, the polyolefin resin may be a low-density polyethylene (LDPE) resin, a linear low-density polyethylene (LLDPE) resin, a high-density polyethylene (HDPE) resin, an ethylene-vinyl acetate (EVA) resin, a polypropylene resin, a polypropylene block copolymer resin, a polypropylene random copolymer resin, a polypropylene elastomer resin, or a blend resin thereof.

Examples of the PE resin may include PE resins commercially available from LG Chem, Ltd. such as LUTENE CC0550BK, LUTENE XL2700BK, LUTENE XL2808BK, LUTENE XL8080NT, LUTENE XL8080TR and LUTENE XL8080UC.

Examples of the LDPE resin may include LDPE resins commercially available from Samsung Total Petrochemicals Co., Ltd. such as 512W, 531G, 530G, 431G and 432G; and those commercially available from Honam Petrochemical Corporation such as XJ700, XJ710, XJ800, XL610, XL505, XL600, XL700, XL710 and X8855.

Examples of the LLDPE resin may include LLDPE resins commercially available from Samsung Total Petrochemicals Co., Ltd. such as 4141 W, 4222F, 4220U, 4141C and 4220S; and those commercially available from Honam Petrochemical Corporation such as UF316, UF313, UF315, UF317 and UF414.

Examples of the HDPE resin may include HDPE resins commercially available from Samsung Total Petrochemicals Co., Ltd. such as B230E, F120U, P110A, Y910A, B221B, F120A, F123A, B220A, B230A and P110PT12; and those commercially available from Honam Petrochemical Corporation such as CJ680, CJ681, 2200J, 2210J, 2600J, 3510J, 2700J, 3520J, 5220B, 5220BN, 6300BN, 8301B, 5200B, 5500B, 6010BP, 6200B, 4000B, 2600F, 5000S, 5000ST, 5100ST, 5500SF, 7000F, 7000FM, 7700F and 5305E.

Examples of the PP resin may include PP resins commercially available from LG Chem, Ltd. such as SEETEC H1500, SEETEC H1501, SEETEC M1315, SEETEC M1400, SEETEC M1425, SEETEC M1500, SEETEC M1600, SEETEC M1700, SEETEC R1560, SEETEC R1610, SEETEC R3400, SEETEC H5300, SEETEC H7411, SEETEC H7500, SEETEC H7511, SEETEC H7525, SEETEC H7600, SEETEC H7630, SEETEC H7700, SEETEC R3420, SEETEC R7700, SEETEC R3410, SEETEC R3450 and SEETEC T3410; homo-PP resins commercially available from Samsung Total Petrochemicals Co., Ltd. such as HF400, HF409, HS120, HF429, HJ730L, HY301, HY311, HJ700, HS301, HY300, HJ400, HY110, HJ730, HI831 and HJ500; and homo-PP resins commercially available from Honam Petrochemical Corporation such as H1500, H140, H1501, H1600, J-150, J-160, J-170 and J-150HC.

Examples of the PP block copolymer resin may include PP block copolymer resins commercially available from Samsung Total Petrochemicals Co., Ltd. such as BJ501, BI830, BJ100, BI300, BI530, BB110, BJ500, BJ730, BJ700, BJ520, BJ522, BJ600, BI518, BI970, BJ300, BJ800, I310, BI740, BI452, BI451 and BI750.

Examples of the PP random copolymer resin may include PP random copolymer resins commercially available from Samsung Total Petrochemicals Co., Ltd. such as RB200, RS401, RJ700, RJ560, RF401 and RF402; and those commercially available from Honam Petrochemical Corporation such as SEP-740, SEP-550, SB-530, B-220D, B-320, SEP-750, SFR-171H, FR-170, FR-160U, FR-160, FR-150H, Y-130, Y-120A, Y-120, SY-140, SY-130, H5300, SB-550A, SB-520, B-310, B-122, SB-520Y, SB-520Y, B-122, B-310, SB-520, SB-550A, H5300, SY-130, SY-140, Y-120, Y-120A, Y-130, FR-150H, FR-160, FR-160U, FR-170, SFR-171H, B-320, B-220D, SB-530, SEP-550, SEP-740, SEP-750, M9600, DL-670M, DL-270A, SFI-740P, SFI-151, FI-155S, SFI-740A, H4540, H4500, SFC-851, SFC-750R, SFC-750, FC-150U, FC-150B, SFC-650BT, SFC-550, H3401, H3400, SFO-130BA-1, SFO-130E, SFO-130A, 5500EF, PH-6000, 7000FT3, V-451, V-411, V-235, V-225, G-153, G-152, G-151, E-373D, E-362SH, E-362S, E-362J, RX-20000, RX-12000, RX-10000, B-352, B-162, HCA-352T, HCA-352S, AE-352S, A-354S, A-354, A-353, A-352 and A-351.

Examples of the PP elastomer resin may include a PP elastomer resins having an ethylene content of 10 to 30 %, more specifically PP elastomer resins commercially available from Exxon Mobil Corporation such as Vistamaxx 3000, Vistamaxx 3020FL, 3980FL, Vistamaxx 6102, Vistamaxx 6102FL, Vistamaxx 6202, Vistamaxx 6202FL; those commercially available from Eastman Corporate such as Ecdel elastomer 9965, Ecdel elastomer 9966, Ecdel elastomer 9967, Neostar elastomer FN005, Neostar elastomer FN006 and Neostar elastomer FN007; and those commercially available from Kuraray Co., Ltd. such as SEP 1001, SEP 1020, SEPS 2002, SEPS 2004, SEPS 2005, SEPS 2006, SEPS 2007, SEPS 2063, SEPS 2104, SEEPS 4033, SEEPS 4044, SEEPS 4055, SEEPS 4077, SEEPS 4099, SEBS 8004, SEBS 8006, SEBS 8007, SEBS 8076 and SEBS 8104.

Examples of the EVA resin may include EVA copolymer resins commercially available from LG Chem, Ltd. such as LC100, LC170, LC180, LC370 and LC670.

The coating composition according to the invention comprises a polypropylene random copolymer resin in an amount of 50 to 70 wt%, and a polypropylene elastomer resin in an amount of 5 to 20 wt%, based on the weight of the coating composition.

The coating composition of the present invention may comprise a mixture of two or more polyolefin resins.

Preferably, the polyolefin resin comprises a polypropylene resin, a polypropylene block copolymer resin, a polypropylene random copolymer resin, a polypropylene elastomer resin, an EVA resin or a blend resin thereof, more preferably, a polypropylene random copolymer resin, a polypropylene elastomer resin or an EVA resin.

### Flame retardant

The flame retardant used in present invention may be a phosphorous-based flame retardant, or an inorganic flame retardant such as a metal oxide and a metal hydroxide.

Examples of the phosphorous-based flame retardant may include melamine phosphate (MP), melamine polyphosphate (MPP), ammonium phosphate, ammonium polyphosphate (APP), red phosphorus, tris(2-chloroethyl)phosphate (TCEP), tris(1-chloro-2-propyl)phosphate (TCPP), isopropylphenyl diphenyl phosphate (IPPP), triphenyl phosphate (TPP), triethyl phosphate (TEP), resorcinol diphosphate (RDP), tricresyl phosphate (TCP), dimethyl methyl phosphonate, diethyl ethyl phosphonate, dimethyl propyl phosphonate, diethyl N,N-bis(2-hydroxyethyl)aminomethyl phosphonate, phosphonic acid, methyl(5-methyl-2-methyl-1,3,2-dioxaphosphorinan-5-yl) methyl ester P,P'-dioxide, phosphonic acid, 9,10-dihydro-9-oxa-10-phosphaphenanthrene-10-oxide (DOPO), poly(1,3-phenylenemethylphosphonate), hexaphenoxytricyclophosphazene, phosphophenanthrene, and a commercial phosphorous-based flame retardant available from Clariant Corporation such as Exolite OP 930, Exolite OP 1230, Exolite OP 550, Exolite OP 560, Exolite OP 1312, Exolite OP 935, Exolite OP 1314 and Exolite OP 1240.

Examples of the inorganic flame retardant may include magnesium dihydroxide (MDH), aluminum trihydroxide (ATH), zinc borate, graphite, and antimony trioxide.

The present invention may use one or more flame retardants listed above.

In order to improve the environmentally friendly property as well as the flame retardancy, the flame retardant is a phosphorus-based flame retardant or an inorganic flame retardant.

The flame retardant may be melamine phosphate, melamine polyphosphate, ammonium phosphate, isopropylphenyl diphenyl phosphate (IPPP), triphenyl phosphate (TPP), triethyl phosphate (TEP), resorcinol diphosphate (RDP), tricresyl phosphate (TCP), magnesium dihydroxide (MDH), aluminum trihydroxide, zinc borate (ATH) and antimony trioxide.

These non halogen-based flame retardants can be recycled and reduce toxic pollutants when burned.

The coating composition comprises the flame retardant in an amount of 15 to 50 wt% based on the weight of the coating composition. When the content falls within the above range, the limited oxygen index (LOI) can be more improved and deterioration of the coating property resulting from excess use of the flame retardant can be prevented.

The coating composition comprises the flame retardant in an amount of 15 to 50 wt%, most preferably 20 to 40 wt%, based on the weight of the coating composition. When the content falls within the above range, the coating property, the processability, the elongation and the flame retardancy of the coating composition can be further improved.

### Additives

The coating composition of the present invention may further comprise other additives such as lubricants, UV stabilizers, antimicrobials, an anti-drip bum agent and other functional fillers in order to enhance the properties thereof.

The coating composition may comprise the additives in an amount of 0.01 to 10 wt% based on the weight of the coating composition.

Preferably, the coating composition may comprise a lubricant, e.g., a stearate lubricant, in an amount of 0.01 to 3 wt% based on the weight of the coating composition in order to improve its miscibility and dispersibility.

The coating composition may comprise an anti-drip bum agent, e.g., fluorine-based anti-drip bum agent, in an amount of 0.01 to 2 wt% based on the weight of the coating composition in order to improve the flame retardancy so that it prevents flames from spreading on fires.

The UV stabilizer may preferably be a benzophenone-based compound or titanium oxide. The other functional fillers may be calcium carbonate, talc-based compound, silica, glass fiber, etc.

### Core yarn

The core yarn of the inventive coated yarn preferably has a diameter of 30 to 1500 denier and a tensile strength of at least 0.5 g/denier, more preferably, at least 3 g/denier.

The core yarn comprises a polyolefin resin, which may be selected from those employed in the coating composition as listed above. The polyolefin resin of the core yarn may be the same as or different from the polyolefin resin of the coating layer.

### Properties

In order to prepare a final fabric product from the coated yarn, the coated yarn is subjected to warping, weaving, inspection, tenter and packaging processes, which requires suitable properties of the coating composition or the coated yarn.

The coating composition of the present invention preferably has a hardness according to ASTM D2240 of 40 to 70 (Shore D). When the hardness falls within the above range, the coating composition can be prevented from scattering dust during a following weaving process.

The inventive coating composition preferably has a moisture content of 0.2% or less under 80% R.H.; a tensile strength according to ASTM D638 of 200 to 600 kgf/cm², more preferably 400 to 600 kgf/cm²; an elongation according to ASTM D638 of 300 to 1000 %, more preferably 500 to 600 kgf/cm²; a limited oxygen index according to ISO 5659-2 of at least 25%, more preferably at least 30%; a UV light fastness according to ISO 105 B02:2000 of grade 6 to 8; a thermal stability of 100 to 120 min when measured at least 180°C; and a smoke density according to ISO 5659-2 of at most 200 ds, more preferably at most 100ds.

Further, the coated yarn of the present invention preferably has a tensile strength according to ASTM D2256/D2256M of at least 3g/denier; and an elongation according to ASTM D2256/D2256M of 5 to 1000 %, more preferably 100 to 800 %. When the tensile strength and the elongation fall within the above ranges, the coated yarn is more suitable for industrial uses.

Further, the fabric of the present invention preferably has a light fastness according to ISO 105 B02:2000 of grade 7 to 8; a limited oxygen index according to ISO 5659-2 of at least 27 %; and a smoke density according to ISO 5659-2 of at most 200 ds.

As stated above, the inventive coated yarn composed of a polyolefin core yarn and a polyolefin coating layer so that the coated yarn can be recycled and re-extruded to produce a coreless yarn. A coreless yarn means a yarn composed of a coating composition only, without a core yarn (see Fig. 1). The coreless yarn is useful in the preparation of a flooring material or other industrial materials.

Especially, the recycling can be conducted with any defective products of the coated yarn such as a defective compound, a defective coated yarn and a defective fabric, which have been generated during the processes of extrusion, coating, warping, weaving, inspection, tenter and packaging.

Further, compared with a halogen-based coated yarn such as a PVC coated yarn, the polyolefin coated yarn of the present invention can eliminate or curtail such harmful materials as phthalate plasticizers and dioxin, toxic gases such as chlorine gas, and other harmful elements causing industrial pollution. Accordingly, the coated yarn of the present invention can be applied for an interior material such as a blind, a flooring material, wall paper, an exterior material for display cupboard and awning, an interior/exterior material for vehicles, and other fiber products with improved properties in terms of flame retardancy as well as environmentally friendly property.

### Preparation

Hereinafter, embodiments of the preparation methods of the coating composition, the coated yarn and the fabric of the present invention are described.

### a) Preparation of coating compositions

In order to prepare a coating composition, one or more feedstock polymer resins, e.g., a polyethylene resin, a polyethylene copolymer resin, a polypropylene resin, a polypropylene copolymer resin, or a blend resin thereof, are added to a mixer in an amount of 20 to 90 wt% based on the total weight of the coating composition and then mixed at room temperature for 1 to 10 min.

A flame retardant is added to the resins in an amount of 5 to 60 wt% based on the total weight of the coating composition and then admixed for 3 to 10 min so as to raise the limited oxygen index of the final fabric product up to 25 % or more.

Further, such functional additives as lubricants, pigments, UV stabilizers, antimicrobials and other fillers may be added to the resulting mixture in order to improve its properties. The functional additives may be added during extrusion compounding in the form of a master batch. If the amount of the additives is less than 5 wt% of the total weight of the coating composition, the additives can be added during the mixing process of the feedstock polymer resins.

### b) Extrusion compounding

After the admixing process is completed, the coating composition is subjected to an extrusion compounding process.

The extrusion compounding is preferably conducted with a twin-screw compounding extruder in order to disperse the coating composition sufficiently. Preferably, an extruder having a temperature range of 100 to 220 °C equipped with a cylinder having a length of at least 1 m is used.

The coating composition is introduced into the extruder through a hopper and extruded at a temperature of 100 to 220 °C.

As stated above, such additives as lubricants, pigments, UV stabilizers, antimicrobials and other fillers may be added to the extruder in the form of a master batch, or may be added to the coating composition in step a) stated above. Since flame retardants are sensitive to moisture and gases, an extruder equipped with a gas venting system is preferred for an environmentally friendly process.

### c) Preparation of coated yarns

For the core yarn, a polyolefin yarn, e.g., having a diameter of 30 to 1500 denier and a tensile strength of at least 3 g/denier, is prepared.

The polyolefin yarn is introduced to an extrusion coating machine in the warp or weft direction. While the polyolefin yarn passes through the die nozzle of the extruder, the coating composition prepared in step b) is coated on the polyolefin yarn in a thickness of 300 to 350 µm, followed by winding thereof.

Preferably, the extrusion coating process is conducted with a single-screw extrusion coating machine at a coating temperature of 100 to 220 °C, more preferably 130 to 190 °C. The coating temperature may be adjusted in light of the melting temperature of the polyolefin yarn. The higher the coating temperature is, the more frequently yarn breakage occurs. The coating rate is preferably 300 to 1200 m/min.

### d) Preparation of fabrics

The coated yarn obtained in step c) is further subjected to the processes of warping, weaving and tenter to obtain a fabric.

The warping process means a process wherein a warp yarn is taken up around a beam of the warping machine at a specific number, length and interval, in light of the length, width and density of a desired fabric.

After the warping process, the warp yarns are weaved with coated yarns serving as weft yarns. The weaving process means a process wherein the warp and weft yarns are interlaced with each other perpendicularly to form a fabric. The fabric may be weaved to have a design or pattern thereon.

Finally, the fabric is subjected to a tenter process, wherein the fabric is stretched with a tenter machine and then the temperature is raised to a range from 120 to 250 °C, while both of the longitudinal ends of the fabric are fixed by pins or clips, so that the fabric has a uniform width without shrinkage.

The following Examples are intended to further illustrate the present invention without limiting its scope.

### Example 1: Preparation of coating compositions

Polymers and additives were mixed together, and the mixture thus obtained was subjected to a compounding process at a temperature of 190 to 230 °C in a twin extruder and then dried at 100°C for 12 hours to obtain a coating composition.

The polymers and additives used in each of the examples and the contents thereof are as follows:

### (Comparative Example 1-1)

- polymer A (homo-PP, HJ500, Samsung Total Petrochemicals Co., Ltd.) 52 wt%;
- polymer B (EVA, vinyl acetate content of 18%, Hanwha Chemical Corp.) 20 wt%;
- flame retardant (metal phosphorous, Exolite OP 930, Clariant Corporation) 25 wt%;
- lubricant (zinc stearate, Hebei Yibo Nano Chemical Co., Ltd.) 1 wt%;
- antimicrobials (BAC-300Z, Ah Sung Fine Chemical Co., Ltd.) 1 wt%;
- anti-drip bum agent (fluorine-based compound, DAL-EL PPA, Daikin Industries Ltd.) 0.5 wt%; and
- UV stabilizer (benzophenone-based compound, LOWILITE 26, Miwon Commercial Co., Ltd.) 0.5 wt%.

### (Comparative Example 1-2)

- polymer A (PP random copolymer, RJ560, Samsung Total Petrochemicals Co., Ltd.) 32 wt%;
- polymer B (PP elastomer, LC 100, LG Chem, Ltd.) 30 wt%;
- polymer C (EVA, vinyl acetate content of 18%, Hanwha Chemical Corp.) 10 wt%;
- flame retardant A (melamine polyphosphate, MPP-100, Universal Chemtech Inc.) 10 wt%;
- flame retardant B (poly-1,3-phenylene methylphohphonate, Fyrol PMP, ICL Industrial Inc.) 15 wt%;
- lubricant (zinc stearate, Hebei Yibo Nano Chemical Co., Ltd.) 1 wt%;
- antimicrobials (BAC-300Z, Ah Sung Fine Chemical Co., Ltd.) 1 wt%;
- anti-drip bum agent (fluorine-based compound, DAL-EL PPA, Daikin Industries Ltd.) 0.5 wt%; and
- UV stabilizer (benzophenone-based compound, LOWILITE 26, Miwon Commercial Co., Ltd.) 0.5 wt%.

### (Comparative Example 1-3)

- polymer A (homo-PP, H1500, Honam Petrochemical Corp.) 27 wt%;
- polymer B (LDPE, 4220S, Samsung Total Petrochemicals Co., Ltd.) 7 wt%;
- polymer C (PP random copolymer, SEP-550, Honam Petrochemical Corp.) 30 wt%;
- flame retardant A (decabromodiphenyl oxide, DBDPO, FR-1210, ICL Industrial Inc.) 28 wt%;
- flame retardant B (decabromodiphenylethane, DBDPE, Poonglim Oil Chemical Co., Ltd. ) 5 wt%;
- lubricant (zinc stearate, Hebei Yibo Nano Chemical Co., Ltd.) 1 wt%;
- antimicrobials (BAC-300Z, Ah Sung Fine Chemical Co., Ltd.) 1 wt%;
- anti-drip burn agent (fluorine-based compound, DAL-EL PPA, Daikin Industries Ltd.) 0.5 wt%; and
- UV stabilizer (benzophenone-based compound, LOWILITE 26, Miwon Commercial Co., Ltd.) 0.5 wt%.

### (Comparative Example 1-4)

- polymer A (PP random copolymer, H140, Honam Petrochemical Corp.) 38 wt%;
- polymer B (PP elastomer having ethylene content of 11%, Vistamaxx 3000, Exxon Mobil Corporation) 28 wt%;
- flame retardant (melamine polyphosphate, MPP-100, Universal Chemtech Inc.) 30 wt%;
- lubricant (zinc stearate, Hebei Yibo Nano Chemical Co., Ltd.) 2 wt%
- anti-drip bum agent (Dyneon^{™} PA5931) 0.5 wt%;
- antimicrobials (Dyneon^{™} PA5931) 1 wt%; and
- UV stabilizer (Dyneon^{™} PA5931) 0.5 wt%.

### (Inventive Example 1-5)

- polymer A (PP random copolymer, SB-530, Honam Petrochemical Corp.) 58 wt%;
- polymer B (PP elastomer having ethylene content of 16%, Vistamaxx 6102, Exxon Mobil Corporation) 18 wt%;
- flame retardant (melamine polyphosphate, MPP-100, Universal Chemtech Inc.) 20 wt%; and
- lubricant (zinc stearate, Hebei Yibo Nano Chemical Co., Ltd.) 2 wt%.
- anti-drip bum agent (Dyneon^{™} PA5931) 0.5 wt%;
- antimicrobials (Dyneon^{™} PA5931) 1 wt%; and
- UV stabilizer (Dyneon^{™} PA5931) 0.5 wt%.

### Example 2: Preparation of coated yarns

The coating composition obtained in Example 1 was introduced into a single-screw extrusion coating machine through a hopper.

The coating composition was coated onto a polypropylene yarn (300 denier, Dong Sun Synthetic Fiber Co., Ltd.), which passed through the nozzle in a single-extrusion coating machine, in an average coating thickness of 400 µm and at a rate of 600 m/min at 160°C to thereby produce a coated yarn.

### Example 3: Preparation of fabrics

The coated yarn obtained in Example 2 was taken up as a warp yarn, and then the coated yarn was subjected to warping and weaving processes so that a fabric in the form of a net with a width of 1.6 m was prepared. Then, the net was subjected to a tenter process at 170 °C to produce a final fabric.

The properties of the coating composition, the coated yarn and the final fabric obtained from the Examples 1 to 3 were evaluated as follows.

### Test 1: Evaluation of coating compositions

### (1) Hardness

The hardness of the coating compositions was measured according to ASTM D2240 (Shore D).

### (2) Tensile strength

The tensile strength of the coating compositions was measured according to ASTM D638.

### (3) Limited oxygen index (LOI)

The limited oxygen index of the coating compositions was measured according to ASTM D2863 (flame mode), which was conducted by passing a mixture of oxygen and nitrogen over a burning specimen, and reducing the oxygen level until a critical level is reached.

### (4) Elongation

The elongation of the coating compositions was measured according to ASTM D638.

### (5) Thermal stability

A sample was prepared into a 5 cm x 10 cm x 0.5 cm specimen and placed in a oven at 180°C. Then, the change in the color of the sample was observed at an interval of 10 min for 90 min by using a color-difference meter.

**Table 1**

| | Hardness (Shore D) | Tensile strength (kgf/cm²) | LOI (%) | Elongation (%) | Thermal stability (min) |
|---|---|---|---|---|---|
| Comparative Example 1-1 | 57 | 410 | 32 | 610 | 136 |
| Comparative Example 1-2 | 63 | 460 | 34 | 490 | 180 |
| Comparative Example 1-3 | 68 | 490 | 31 | 460 | 120 |
| Comparative Example 1-4 | 60 | 420 | 35 | 546 | 114 |
| Inventive Example 1-5 | 56 | 380 | 34 | 620 | 100 |

As shown in Table 1, the coated yarn of the present invention exhibited good properties in terms of hardness, tensile strength and elongation. Further, the LOIs were sufficient to exhibit good flame retardancy and the thermal stabilities were enough to certify the color fastness suitable for exterior materials.

### Test 2: Evaluation of coated yarns

### (1) Tensile strength

The tensile strength of the coated yarns was measured according to ASTM D2256/D2256M.

### (2) Elongation

The elongation of the coated yarns was measured according to ASTM D2256/D2256M.

**Table 2**

| | Tensile strength (g/denier) | Elongation (%) |
|---|---|---|
| Comparative Example 1-1 | 2.2 | 85 |
| Comparative Example 1-2 | 2.4 | 95 |
| Comparative Example 1-3 | 2.1 | 55 |

As shown in Table 2, the tensile strength and the elongation of the coated yarn of the present invention is suitable for weaving.

### Test 3: Evaluation of Fabrics

### (1) Color fastness to light

The color fastness to light of the fabrics was measured according to ISO 105 B02: 2000.

### (2) Limited oxygen index (LOI)

The limited oxygen index of the fabrics was measured according to ISO 5659-2 (flame mode).

### (3) Smoke density

The smoke density of the fabrics was measured according to ISO 5659-2.

**Table 3**

| | Color fastness (grade) | LOI (%) | Smoke density (ds) |
|---|---|---|---|
| Comparative Example 1-1 | 8 | 28.5 | 85 |
| Comparative Example 1-2 | 8 | 30 | 102 |
| Comparative Example 1-3 | 8 | 27 | 120 |
| Comparative Example 1-4 | 8 | 32 | 98 |
| Inventive Example 1-5 | 8 | 31 | 86 |

As shown in Table 3, the fabric according to the present invention had a color fastnesses of the highest grade 8, which is suitable for exterior materials. Further, the LOIs were sufficient to exhibit good flame retardancy, and the smoke densities complied with the domestic and foreign standards for flame retardants, e.g., Korean or Australian standards.

## Claims

1. A coating composition for preparing a coated yarn comprising a polypropylene random copolymer resin in an amount of 50 to 70 wt% and a polypropylene elastomer resin in an amount of 5 to 20 wt%, based on the weight of said coating composition and a flame retardant selected from the group consisting of an organic phosphorus-based flame retardant, an inorganic flame retardant, and a mixture thereof, wherein said flame retardant is selected from the group consisting of melamine phosphate, melamine polyphosphate, ammonium phosphate, isopropylphenyl diphenyl phosphate (IPPP), triphenyl phosphate (TPP), triethyl phosphate (TEP), resorcinol diphosphate (RDP), tricresyl phosphate (TCP), magnesium dihydroxide (MDH), aluminum trihydroxide, zinc borate (ATH), antimony trioxide, and a mixture thereof; and said coating composition comprises said flame retardant in an amount of 15 to 50 wt% based on the weight of said coating composition.

2. The coating composition of claim 1 9, having a tensile strength according to ASTM D638 of 200 to 600 kgf/cm², an elongation according to ASTM D638 of 300 to 1000 %, and a limited oxygen index according to ISO 5659-2 of at least 25%.

3. A coated yarn composed of a core yarn comprising a first polyolefin resin and a coating layer obtainable by a coating composition according to claim 1 covering said core yarn, wherein said coating layer comprises a second polyolefin resin and a flame retardant, and said first polyolefin resin and said second polyolefin resin are each independently selected from the group consisting of a polyethylene resin, a polyethylene copolymer resin, a polypropylene resin, a polypropylene copolymer resin, and a blend resin thereof.

4. The coated yarn of claim 3, having a tensile strength of at least 0.5 g/denier and an elongation ranging from 5 % to 1000 %.

5. The coated yarn of claim 3, wherein said core yarn has a diameter of 30 to 1500 denier and the coating layer has a thickness of 120 to 1000 µm.

6. The coated yarn of claim 3, wherein said first polyolefin resin and said second polyolefin resin are each independently selected from the group consisting of a low density polyethylene (LDPE) resin, a linear low density polyethylene (LLDPE) resin, a high density polyethylene (HDPE) resin, an ethylene-vinyl acetate (EVA) copolymer resin, a polypropylene resin, a polypropylene block copolymer resin, a polypropylene random copolymer resin, a polypropylene elastomer resin, and a blend resin thereof, and the coating layer comprises said second polyolefin resin in an amount of 30 to 90 wt% based on the weight of said coating layer.

7. The coated yarn of claim 3, wherein said coating layer further comprises additives in an amount of 0.01 to 10 wt% based on the weight of said coating layer, said additives being selected from the group consisting of a lubricant, a UV stabilizer, an antimicrobial, a fluorine-based anti-drip bum agent, and a mixture thereof.

8. A method for preparing the coated yarn of claim 3, comprising the steps of:
a) preparing a core yarn comprising a first polyolefin resin;
b) preparing a coating composition comprising a second polyolefin resin and a flame retardant; and
c) coating said core yarn with said coating composition to obtain said coated yarn, wherein said first polyolefin resin and said second polyolefin resin are each independently selected from the group consisting of a polyethylene resin, a polyethylene copolymer resin, a polypropylene resin, a polypropylene copolymer resin, and a blend resin thereof.

9. The method of claim 8, wherein the coating in step (c) is conducted at a temperature of 130 to 190 °C and at a rate of 300 to 1200 m/min.

10. A fabric woven from said coated yarn according to any one of claims 3 to 7.

11. The fabric of claim 10, having a light fastness of grade 7 to 8, a limited oxygen index of at least 27%, and a smoke density of at most 200 ds.

## Patentansprüche

1. Beschichtungszusammensetzung zur Herstellung eines beschichteten Garns, aufweisend ein Polypropylen-Random-Copolymer-Harz in einer Menge von 50 bis 70 Gew.-% und ein Polypropylen-Elastomer-Harz in einer Menge von 5 bis 20 Gew.-%, basierend auf dem Gewicht der Beschichtungszusammensetzung und ein Flammschutzmittel ausgewählt aus der Gruppe bestehend aus einem organischen Phosphor-basierten Flammschutzmittel, einem anorganischen Flammschutzmittel und einer Mischung davon, wobei das Flammschutzmittel ausgewählt ist aus der Gruppe bestehend aus Melaminphosphat, Melaminpolyphosphat, Ammoniumphosphat, Isopropylphenyldiphenylphosphat (IPPP), Triphenylphosphat (TPP), Triethylphosphat (TEP), Resorcinoldiphosphat (RDP), Trikresylphosphat (TCP), Magnesiumdihydroxid (MDH), Aluminiumtrihydroxid, Zinkborat (ATH), Antimoniumtrioxid, und einem Gemisch davon; und die Beschichtungszusammensetzung enthält das Flammschutzmittel in einer Menge von 15 bis 50 Gew.-% basierend auf dem Gewicht der Beschichtungszusammensetzung.

2. Die Beschichtungszusammensetzung gemäß Anspruch 1, aufweisend eine Zugfestigkeit gemäß ASTM D638 von 200 bis 600 kgf/cm², eine Elongation gemäß ASTM D638 von 300 bis 1000%, und einen Sauerstoffbedarf (limited oxygen index) gemäß ISO 5659-2 von mindestens 25%.

3. Ein beschichtetes Garn zusammengesetzt aus einem Kerngarn, aufweisend ein erstes Polyolefin-Harz und eine Beschichtungsschicht, die mittels einer Beschichtungszusammensetzung gemäß Anspruch 1, die das Kerngarn bedeckt, erhältlich ist, wobei die Beschichtungsschicht ein zweites Polyolefin-Harz und ein Flammschutzmittel aufweist, und das erste Polyolefin-Harz und das zweite Polyolefin-Harz jeweils unabhängig ausgewählt sind aus der Gruppe bestehend aus einem Polyethylen-Harz, einem Polyethylen-Copolymer-Harz, einem Polypropylen-Harz, einem Polypropylen-Copolymer-Harz, und einem Mischharz daraus.

4. Das beschichtete Garn gemäß Anspruch 3, aufweisend eine Zugfestigkeit von zumindest 0,5 g/denier und eine Elongation im Bereich von 5 bis 1000%.

5. Das beschichtete Garn gemäß Anspruch 3, wobei das Kerngarn einen Durchmesser von 30 bis 1500 denier und die Beschichtungsschicht eine Dicke von 120 bis 1000 µm aufweist.

6. Das beschichtete Garn gemäß Anspruch 3, wobei das erste Polyolefin-Harz und das zweite Polyolefin-Harz jeweils unabhängig ausgewählt sind aus der Gruppe bestehend aus einem Polyethylen-Harz niedriger Dichte (LDPE), einem linearen Polyethylen-Harz niedriger Dichte (LLDPE), einem Polyethylen-Harz hoher Dichte (HDPE), einem Ethylenvinyl-Acetat (EVA)-Copolymer-Harz, einem Polypropylen-Harz, einem Polypropylen-Block-Copolymer-Harz, einem Polypropylen-Random-Copolymer-Harz, einem Polypropylen-Elastomer-Harz und einem Mischharz daraus, und die Beschichtungsschicht das Polyolefin-Harz in einer Menge von 30 bis 90 Gew.-%, basierend auf dem Gewicht der Beschichtungsschicht, aufweist.

7. Das beschichtete Garn gemäß Anspruch 3, wobei die Beschichtungsschicht außerdem aufweist: Additive in einer Menge von 0,01 bis 10 Gew.-%, basierend auf dem Gewicht der Beschichtungsschicht, wobei diese Additive ausgewählt sind aus der Gruppe bestehend aus einem Schmiermittel, einem UV-Stabilisator, einem antimikrobiellen Mittel, einem Fluor-basierten Anti-Tropfbrandmittel, und einer Mischung daraus.

8. Ein Verfahren zur Herstellung des beschichteten Garns gemäß Anspruch 3, aufweisend folgende Schritte:
a) Herstellen eines Kerngarns aufweisend ein erstes Polyolefin-Harz;
b) Herstellen einer Beschichtungszusammensetzung aufweisend ein zweites Po lyolefin-Harz und ein Flammschutzmittel; und
c) Beschichten des Kerngarns mit der Beschichtungszusammensetzung, um das beschichtete Garn zu erhalten, wobei das erste Polyolefin-Harz und das zwei te Polyolefin-Harz jeweils unabhängig voneinander ausgewählt sind aus der Gruppe bestehend aus einem Polyethylen-Harz, einem Polyethylen-Copolymer-Harz, einem Polypropylen-Harz, einem Polypropylen-Copolymer-Harz, und einem Mischharz daraus.

9. Verfahren gemäß Anspruch 8, wobei die Beschichtung in Schritt (c) ausgeführt wird bei einer Temperatur von 130° bis 190° C und bei einer Geschwindigkeit von 300 bis 1200 m/min.

10. Ein Gewebe, das aus dem beschichteten Garn gemäß einem der Ansprüche 3 bis 7 gewebt ist.

11. Das Gewebe gemäß Anspruch 10, aufweisend eine Lichtechtheit der Stufe 7 bis 8, einen Sauerstoffbedarf (limited oxygen index) von zumindest 27%, und eine Rauchgasdichte von höchstens 200 ds.

## Revendications

1. Une composition d'enduit pour la préparation d'un fil enduit comprenant une résine de copolymère statistique de polypropylène en un montant de 50 à 70 % en poids et une résine d'élastomère de polypropylène en un montant de 5 à 20 % en poids sur la base du poids de la dite composition d'enduit et un retardateur de flamme choisi au sein du groupe constitué par un retardateur de flamme à base de phosphore organique, un retardateur de flamme inorganique, et un mélange de ceci, le retardateur de flamme étant choisi au sein du groupe constitué par le phosphate de mélamine, le polyphosphate de mélamine, le phosphate d'ammonium, l'isopropylphénylediphénylephosphate (IPPP), le phosphate de triphényle (TPP), le phosphate de triéthyle (TEP), le diphosphate de résorcinol (RDP), le phosphate de tricrésyle (TCP), le dihydroxyde de magnésium (MDH), le trihydroxyde d'aluminium, le borate de zinc (ATH), le trioxyde d'antimoine, et un mélange de ceci ; et la dite composition d'enduit comprend le dit retardateur de flamme en un montant de 15 à 50 % en poids basé sur le poids de la dite composition d'enduit.

2. La composition d'enduit de la revendication 1, ayant une résistance à la traction selon ASTM D638 de 200 à 600 kgf/cm², une élongation selon ASTM D638 de 300 à 1000 %, et un indice limite d'oxygène (limited oxygen index) selon ISO 5659-2 d'au moins 25%.

3. Un fil enduit composé d'un fil d'âme comprenant une première résine de polyoléfine et une couche d'enduit pouvant être obtenue par une composition d'enduit selon la revendication 1 couvrant le dit fil d'âme, la couche d'enduit comprenant une deuxième résine de polyoléfine et un retardateur de flamme, et la dite première résine de polyoléfine et la dite deuxième résine de polyoléfine sont chacune indépendamment choisie au sein du groupe constitué par une résine de polyéthylène, une résine de copolymère de polyéthylène, une résine de polypropylène, une résine de copolymère de polypropylène, et une résine de mélange de ceux-ci.

4. Le fil enduit de la revendication 3, ayant une résistance à la traction d'au moins 0,5 g/denier et une élongation allant de 5% à 1000%.

5. Le fil enduit de la revendication 3, dans lequel le dit fil d'âme a un diamètre de 30 à 1500 denier et la couche d'enduit a une épaisseur de 120 à 1000 µm.

6. Le fil enduit de la revendication 3, dans lequel la première résine de polyoléfine et la dite deuxième résine de polyoléfine sont chacune indépendamment choisies au sein du groupe constitué par une résine de polyéthylène à basse densité (LDPE), une résine de polyéthylène à basse densité linaire (LLDPE), une résine de polyéthylène à haute densité (HDPE), une résine de copolymère d'éthylène et d'acétate de vinyle (EVA), une résine de polypropylène, une résine de copolymère séquencé de polypropylène, une résine de copolymère aléatoire de polypropylène, une résine élastomère de polypropylène et une résine de mélange de ceux-ci, et la couche d'enduit comprend la dite deuxième résine de polyoléfine en un montant de 30 à 90 % en poids basé sur le poids de la dite couche d'enduit.

7. Le fil enduit de la revendication 3, dans lequel la couche d'enduit en plus comprend des adjuvants en un montant de 0,01 à 10 % en poids basé le poids de la dite couche d'enduit, les dits adjuvants étant choisi parmi le groupe constitué par un lubrifiant, un stabilisant anti-UV, un antimicrobien, un agent anti-incinération au goutte-à-goutte à base de fluor, et un mélange de ceux-ci.

8. Un procédé pour la préparation du fil enduit de la revendication 3, comprenant les étapes de :
(a) La préparation d'un fil d'âme comprenant une première résine de polyoléfine ;
(b) La préparation d'une composition d'enduit comprenant une deuxième résine de polyoléfine et un retardateur de flamme, et
(c) L'enduction du dit fil d'âme avec la dite composition d'enduit afin d'obtenir le dit fil enduit, dans lequel la première résine de polyoléfine et la deuxième résine de polyoléfine sont chacune indépendamment choisie au sein du groupe constitué par une résine de polyéthylène, une résine de copolymère de polyéthylène, une résine de polypropylène, une résine de copolymère de polypropylène, et une résine de mélange de ceux-ci.

9. Le procédé de la revendication 8, dans lequel l'enduction dans l'étape (c) est effectué à une température de 130 à 190 °C et à une vitesse de 300 à 1200 m/min.

10. Un tissu tissé à partir du dit fil enduit selon l'une quelconque des revendications 3 à 7.

11. Le tissu selon la revendication 10 ayant une solidité à lumière d'un dégré de 7 à 8, un indice limite d'oxygène (limited oxygen index) d'au moins 27%, et une densité de la fumée de 200 ds au maximum.
